# EUROPÄISCHE PATENTSCHRIFT

(11) **EP 3 037 213 B1**
(45) Veröffentlichungstag und Bekanntmachung des Hinweises auf die Patenterteilung: **21.03.2018**
(21) Anmeldenummer: 15200779.5
(22) Anmeldetag: 17.12.2015
(51) Int. Cl.: B25B 19/00, B25B 23/00

(54) **VORRICHTUNG ZUM MANUELLEN LÖSEN VON SCHRAUBVERBINDUNGEN**
DEVICE FOR MANUALLY UNSCREWING SCREWED CONNECTIONS
DISPOSITIF DE DESSERRAGE MANUEL D'ASSEMBLAGES PAR VIS

(30) Priorität: 17.12.2014 AT 509162014
(43) Veröffentlichungstag der Anmeldung: 29.06.2016
(73) Patentinhaber: Kristl, Seibt & Co. Gesellschaft m.b.H., 8052 Graz (AT)
(72) Erfinder: ROSSEGGER, Wolfram, 8052 Graz (AT); VOIT, Franz, 8052 Graz (AT)
(74) Vertreter: Sonn & Partner Patentanwälte

(56) Entgegenhaltungen:
- DE-A1- 1 503 043
- US-A- 4 708 209

## Beschreibung

Die Erfindung betrifft eine Vorrichtung zum manuellen Lösen von Schraubverbindungen mit einer Antriebswelle und einem Abtriebselement, das gegenüber der Antriebswelle drehbar gelagert ist, wobei ein gegenüber der Antriebswelle drehbar gelagertes Impulsübertragungselement vorgesehen ist, das in einer inaktiven Stellung mit dem Abtriebselement formschlüssig verbunden ist, wobei zwischen Antriebswelle und Impulsübertragungselement zumindest ein Federelement angeordnet ist, das bei Verdrehung der Antriebswelle gegenüber dem Abtriebselement gespannt wird, so dass bei Lösen der formschlüssigen Verbindung zwischen Impulsübertragungselement und Antriebselement ein Drehimpuls an das Abtriebselement übertragen wird.

Schwer lösbare Schraubverbindungen werden üblicherweise mittels mechanischer Schlagschrauber geöffnet, die entweder elektrisch oder mit Druckluft betrieben werden. Unter Aufbringung kontinuierlicher Drehmoment-Impulse werden die Schrauben dabei stoßartig belastet, wobei Drehmomentspitzen, welche deutlich höher sind als das statisch aufgebrachte Drehmoment, zum Lösen der Schraubverbindung führen. Nachteilig hierbei ist zum einen der relativ hohe, mit entsprechenden Kosten einhergehende Herstellungsaufwand und zum anderen die Notwendigkeit von Antriebsenergie in Form von Druckluft oder elektrischem Strom, was die portable Anwendung über längere Zeiträume deutlich einschränkt.

Aus der DE 2317665 A1 ist eine Vorrichtung der eingangs angeführten Art bekannt, bei welcher zum Lösen festsitzender Schraubenbolzen und Muttern ein Schlagkörper vorgesehen ist, der nach Betätigung die Blockierung des Bolzens oder der Mutter lösen kann. Hierbei wird über ein Federelement ein Drehimpuls im Schlagkörper gespeichert. Um die gespeicherte Energie abzugeben wir der Körper und damit der Schlagkörper gegen das zu lösende Element gedrückt; dadurch kommt eine Vorsprung außer Eingriff mit einer Formscheibe und der Schlagkörper dreht. Um einen Schlagimpuls abzugeben, muss der Schlagkörper in Achsrichtung zurückgeschoben werden.

Weiters ist aus der SE 525230 C eine Vorrichtung zum manuellen Lösen oder Anziehen von Schraubverbindungen mittels Impulskraft bekannt. Die Vorrichtung weist einen Griff , ein Antriebselement und ein Impulsübertragungselement zwischen dem Griff und dem Antriebselement auf. Durch Verdrehen des Griffs wird Energie in einem Federelement gespeichert. Die in Federelement gespeicherte Energie wir bei Erreichen eines vorgegebenes Drehmoment an das Impulsübertragungselement übertragen, das gegen einen Anschlag auf der Welle dreht, so dass ein Stoßimpuls auf das zu lösende Element ausgeübt wird. Die Überführung des Impulsübertragungselement in ein aktive Stellung wird hierbei über federbelastete Sperrkugeln bestimmt.

Weiters sind zum Lösen schwer lösbarer Schraubverbindung händisch bedienbare Werkzeuge bekannt, die auf den Schraubenkopf aufgesetzt werden und mit einem Hammer in Richtung der Schraubenachse mit Schlägen beaufschlagt werden. Die axialen Schläge werden dabei über eine Schrägverzahnung im Inneren des Werkzeugs in Drehimpulse umgewandelt, die schließlich zum Lösen der Schraube führen. Ein großer Nachteil hierbei sind die stoßartigen axialen Belastungen auf das Bauteil, die bei empfindlichen Bauteilen wie beispielsweise Lager oder Wellen zu Beschädigungen führen können.

Die DE 1 503 043 A offenbart ein von Hand betätigbares Werkzeug zum Festziehen oder Lösen von Schrauben oder Muttern, mit einer Ausgangswelle und einem trommelförmigen Körper, der eine Federeinheit und eine rotierende Schwungmasse aufweist, wobei die Federeinheit aus zwei ineinander gewundenen Teilen besteht, die an jeweils gegenüberliegenden Stellen mit dem trommelförmigen Körper und der Schwungmasse verbunden sind. Das Werkzeug weist Ansätze auf, auf die beispielsweise ein Wendeeisen aufsetzbar ist, und die fest mit einem Gehäuse verbunden sind. Die Ausgangswelle ist über eine Stecknuss mit der festzuziehenden oder zu lösenden Mutter verbindbar. Zum Festziehen oder Lösen einer Schraubverbindung wird die Federeinheit und die damit verbundene Schwungmasse durch Drehen des Wendeeisens vorgespannt, worauf nach Lösen eines Sperrmechanismus die Schwungmasse aufgrund der Federkraft rotiert und einen Drehimpuls auf die Ausgangswelle abgibt. Die DE 1 503 043 A weist eine Reihe von Nachteilen auf, darunter die relativ großen Dimensionen des Werkzeugs, welche die Anwendung stark einschränken, da das Werkzeug nur an frei zugänglichen Stellen angewendet werden kann. Ein weiterer Nachteil ist die relativ komplexe Bauweise mit vielen Einzelteilen und ein damit einhergehender hoher Herstellungsaufwand sowie die erhöhte Gefahr von Defekten. Darüber hinaus wird die Ausgangswelle mit Drehimpulsen beaufschlagt, wodurch, bedingt durch den relativ kleinen Kraftarm, zur Erzeugung ausreichend hoher Drehmomentspitzen eine relativ große Schwungmasse mit einer entsprechend dimensionierten Federeinheit notwendig ist.

Demnach besteht die Aufgabe der Erfindung darin, eine konstruktiv einfache, manuell zu bedienende Vorrichtung zum Lösen von schwer lösbaren Schraubverbindungen zu schaffen, die keine Fremdenergie erfordert. Darüber hinaus soll die Vorrichtung vorzugsweise kompakt sein, geringes Gewicht aufweisen und kostengünstig herstellbar sein, sodass sie leicht transportiert, und beispielsweise mit einem herkömmlichen Steckschlüssel bedient werden kann.

Erfindungsgemäß wird die Aufgabe durch eine Vorrichtung nach Anspruch 1 gelöst. Durch die Übertragung des Drehimpulses vom Impulsübertragungselement auf das Abtriebselement, werden bei schlanker Bauweise der Vorrichtung große Drehmomentspitzen erreicht, die ein einfaches und schnelles Lösen der schwergängigen Schraubverbindung ermöglichen. Zudem kann eine einfache und leicht zu lösende formschlüssige Verbindung zwischen Impulsübertragungselement und Abtriebselement hergestellt werden, wobei durch die Anordnung des Nockens ein verklemmungsfreies Verschieben der Sperrelement bei Verdrehen der Antriebswelle gewährleistet wird.

Es ist vorteilhaft, wenn das Impulsübertragungselement zumindest eine Schlagfläche aufweist, welche zwecks stoßartiger Impulsübertragung mit einer Gegenfläche des Abtriebselements zusammenwirkt. Durch dieses Zusammenspiel kann eine gute Kraftübertragung gewährleistet werden.

Vorzugsweise ist vorgesehen, dass das Impulsübertragungselement und das Abtriebselement jeweils zwei zusammenwirkende Schlag- und Gegenflächen aufweisen. Vorzugsweise sind die Schlag- und Gegenfläche daher um ca. 180° verdreht zueinander angeordnet, so dass das Impulsübertragungselement um ca. 180° verdreht werden kann und das Federelement entsprechend gespannt wird, bevor das Impulsübertragungselement in eine aktive Stellung freigegeben wird.

In einer bevorzugten Ausführung sind in der inaktiven Stellung das Impulsübertragungselement und das Abtriebselement über zwei, insbesondere stiftörmige, Sperrelemente miteinander verbunden.

Vorteilhafterweise weist die Antriebswelle zwei Nocken zum Überführen der Sperrelemente in eine nicht-sperrende Stellung auf.

Wenn die zumindest eine Nocke mittelbar über jeweils ein Verbindungselement, insbesondere einen Verbindungsstift, mit dem Sperrelement zusammenwirkt, kann der Verbindungsstift in der aktiven Stellung des Impulsübertragungselements mit diesem mitrotieren, wohingegen das Sperrelemente in einer Freigabestellung verharrt.

Wenn als Federelement eine, vorzugsweise zwei, Schenkelfeder(n) vorgesehen ist bzw. sind, kann eine kompakte und einfache Bauweise erzielt werden.

In einer bevorzugten Ausführung sind die gegenüberliegenden Endabschnitte der zumindest einen Schenkelfeder jeweils in einer nutförmigen Aufnahme des Impulsübertragungselements und der Antriebswelle formschlüssig aufgenommen. Dadurch kann eine Übertragung des von der Antriebswelle eingeleiteten Drehmoments über die mindestens eine Schenkelfeder auf das Impulsübertragungselement erreicht werden.

Vorteilhafterweise weist das Impulsübertragungselement zwei, vorzugsweise diametral gegenüberliegend angeordnete, Schlagstücke auf, die jeweils über eine Schenkelfeder mit der Antriebswelle verbunden sind. Hiedruch ergibt sich ein konstruktiv einfacher Aufbau, wobei zugleich eine Verdrehbarkeit des Impulsübertragungselements von ca. 180° ermöglicht wird, bevor das Impulsübertragungselement in eine aktive Stellung überführt wird. Als Schlagstück kann z.B. ein im Wesentlichen quaderförmiger Metallkörper hoher Dichte verwendet werden, um einen starken Drehimpuls zu erzeugen.

In einer bevorzugten Variante weist das Abtriebselement einen hohlzylindrischen Teil auf, in dessen Innenraum zumindest eine Nocke vorspringt, die eine Gegenfläche für die Schlagfläche des Impulsübertragungselement aufweist. Hiedurch wird eine besonders kompakte Ausgestaltung erzielt, wobei die mindestens eine Nocke zudem einfach hergestellt werden kann, beispielsweise durch Fräsen. Durch das Zusammenwirken von Schlagstück und Gegenfläche kann eine gute Kraftübertragung auf das Abtriebselement erreicht werden.

Besonders vorteilhaft ist es, wenn das Abtriebselement an einer Stirnseite einen vorzugsweise als Außenvierkant ausgebildeten quaderförmigen Vorsprung aufweist. Dadurch wird es ermöglicht, die Vorrichtung in Verbindung mit herkömmlichen Aufsätzen für Steckschlüssel zu verwenden, welche auf den quaderförmigen Vorsprung aufgesteckt werden.

Wenn zusätzlich die Antriebswelle an einer Stirnseite, vorzugsweise in einem Abschlussflansch, eine quaderförmige Ausnehmung, vorzugsweise in der Art eines Innenvierkants, aufweist, kann die Vorrichtung mit herkömmlichen Steckschlüsselsätzen kombiniert werden, wobei die Vorrichtung zwischen dem Steckschlüssel, der in der quaderförmigen Ausnehmung platziert wird, und einem Aufsatz, der auf den quaderförmigen Vorsprung gesteckt wird, angeordnet wird.

Vorteilhafterweise wird die Antriebswelle durch eine Durchgangsöffnung in einem Endteil des Abtriebselements hindurchgeführt, wobei der Abschlussflansch der Antriebswelle in einer korrespondierenden Ausnehmung des Endteil aufgenommen ist. Durch diese Anordnung kann einerseits eine kompakte Bauform erreicht werden und andererseits wird eine gute Führung der Antriebswelle im Abtriebselement gewährleistet.

In einer bevorzugten Ausführung sind eine den quaderförmigen Vorsprung aufweisende Abschlussscheibe, ein hohlzylindrischer Teil und ein den Abschlussflansch der Antriebswelle aufnehmender Endteil zur Ausbildung des Abtriebselements unlösbar miteinander verbunden, insbesondere verschweißt. Dadurch wird ein einfacher Herstellungsprozess erreicht, da die drei Einzelteile in relativ einfacher Weise gefertigt werden können. Durch die unlösbare Verbindung wird eine starre und robuste Einheit geschaffen, die zudem gegen das Eindringen von Schmutz und Feuchtigkeit von Außen geschützt ist.

Wenn die Abschlussscheibe eine zentrische Vertiefung zur Aufnahme eines Endabschnitts der Antriebswelle aufweist, wird eine gute axiale und radiale Führung der Antriebswelle gewährleistet. Zudem wird durch diese einfache Bauweise eine kostengünstige Vorrichtung geschaffen und der Zusammenbau erleichtert, wodurch wiederum der gesamte Herstellungsprozess beschleunigt werden kann.

Es ist weiters von Vorteil, wenn an der Innenseite der Ausnehmung des Endteils eine umlaufende Nut zur Aufnahme eines Sicherungsrings vorgesehen ist. Die Anordnung eines Sicherungsrings gewährleistet eine axiale Fixierung der Antriebswelle im Abtriebselement, ohne die Drehbeweglichkeit einzuschränken und stellt eine einfache und kostengünstige Lösung dar.

Die Erfindung wird nachstehend anhand eines bevorzugten Ausführungsbeispiels, auf das sie jedoch keinesfalls beschränkt ist, im Detail erläutert. In den Zeichnungen zeigen:
- Fig. 1: Die erfindungsgemäße Vorrichtung in perspektivischer Ansicht;
- Fig. 2: Vorrichtung gemäß Fig. 1 in Explosionsansicht;
- Fig. 3a: die Vorrichtung gemäß Fig. 1 in Draufsicht;
- Fig. 3b: die Vorrichtung gemäß Fig. 1 in geschnittender Ansicht entlang der Linie E-E in Fig. 2a ;
- Fig. 4a: Vorrichtung gemäß Fig. 1 in Ansicht von Vorne;
- Fig. 4b: Vorrichtung gemäß Fig. 1 in geschnittender Ansicht entlang der Linie A-A in Fig. 3a in der Ausgangslage;
- Fig. 4c: Vorrichtung gemäß Fig. 1 in geschnittender Ansicht entlang der Linie A-A in Fig. 3a bei gespannter Feder;
- Fig. 4d: Vorrichtung gemäß Fig. 1 in geschnittender Ansicht entlang der Linie A-A in Fig. 3a nach Lösen des Sperrstifts; und
- Fig. 4e: Vorrichtung gemäß Fig. 1 in geschnittender Ansicht entlang der Linie A-A in Fig. 3a bei Übertragung des Drehimpulses auf das Abtriebselement.

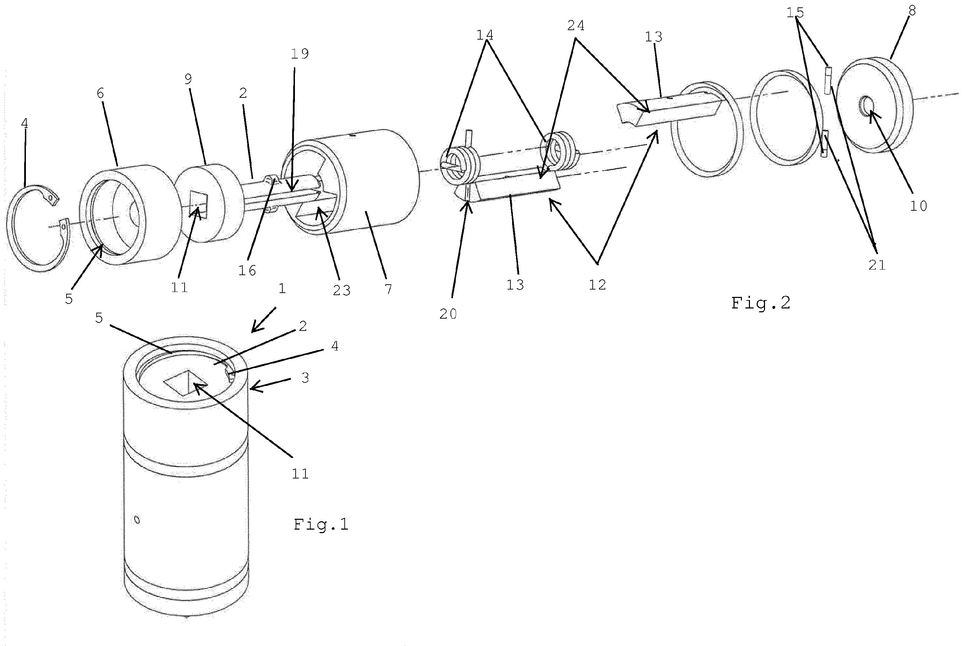

Wie in Fig. 1 ersichtlich weist die Vorrichtung 1 eine Antriebswelle 2 auf, die in einem Abtriebselement 3 drehbar gelagert ist und gegen axiale Verschiebung mit einem Sicherungsring 4 gesichert ist, welcher in einer dafür vorgesehenen Nut 5 im Abtriebselement 3 angeordnet ist.

In Fig. 2 ist insbesondere ersichtichtlich, dass das Abtriebselement 3 einen Endteil 6, einen hohlzylindrischen Teil 7 und eine Abschlussscheibe 8 aufweist, welche unlösbar miteinander verbunden, vorzugsweise verschweißt, werden, wobei die Abschlussscheibe 8 eine zentrische Vertiefung 10 zur axialen und radialen Führung der Antriebswelle 2 aufweist. Die Antriebswelle 2 weist einen Abschlussflansch 9 auf, in dem eine quaderförmige Ausnehmung 11 angeordnet ist, beispielsweise zur Aufnahme eines herkömmlichen Steckschlüssels.

Weiters weist die Vorrichtung 1 ein Impulsübertragungselement 12 auf, das sich aus zwei Schlagstücken 13 zusammensetzt, und gegenüber der Antriebswelle 2 drehbar gelagert sind und über zumindest ein, vorzugsweise zwei Federelement(e) 14 bei Verdrehung der Antriebswelle 2 gegenüber dem Abtriebselement 3 gespannt werden können. In der inaktiven Stellung ist das Impulsübertragungselement 12 bzw. sind die Schlagstücke 13 mittels stiftförmiger Sperrelemente 15 formschlüssig mit dem Abtriebselement 3 verbunden. Weiters ist (sind) auf der Antriebswelle 2 ein, vorzugsweise zwei Nocke(n) 16 zum Überführen des zumindest einen stiftförmigen Sperrelements 15 in eine nicht sperrende Stellung angeordnet.

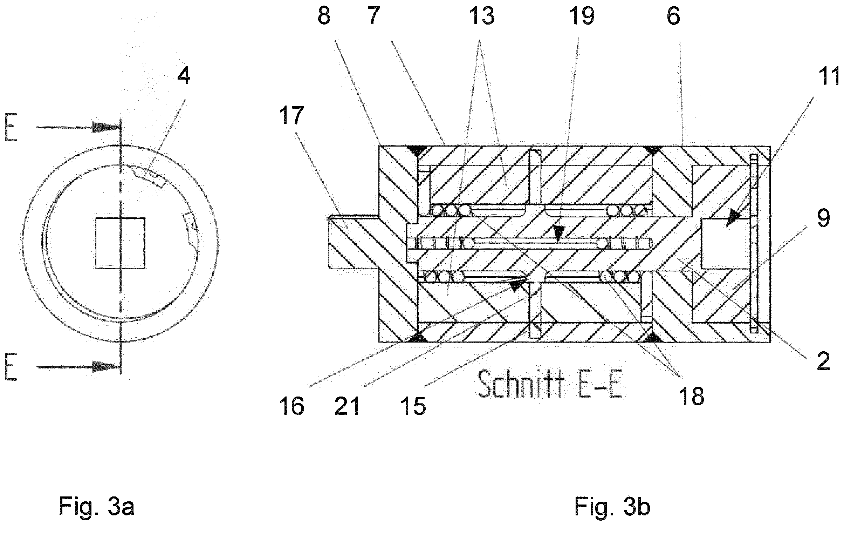

Wie in Fig. 3A gezeigt, ist zur Aufnahme beispielsweise eines Aufsatzes für herkömmliche Steckschlüssel an der Außenseite der Abschlussscheibe 8 ein quaderförmiger Vorsprung 17 vorgesehen. Bei dem gezeigten Ausführungsbeispiel sind die Federelemente 14 durch Schenkelfedern 18 gebildet, welche die Antriebswelle 2 umschließen und deren Endabschnitte jeweils in einer nutförmigen Aufnahme 19 in der Antriebswelle 2 und einer nutförmigen Aufnahme 20 (vgl. Fig. 2) in einem Impulsübertragungselement 12 formschlüssig aufgenommen sind. Bei Verdrehung der Antriebswelle 2 verschieben die Nocken 16 die Verbindungselemente 21, welche in dafür vorgesehenen Bohrungen in den Schlagstücken 13 verschieblich angeordnet sind. Die Verbindungselemente 21 korrespondieren ihrerseits mit den ebenfalls verschieblich angeordneten stiftförmigen Sperrelementen 15.

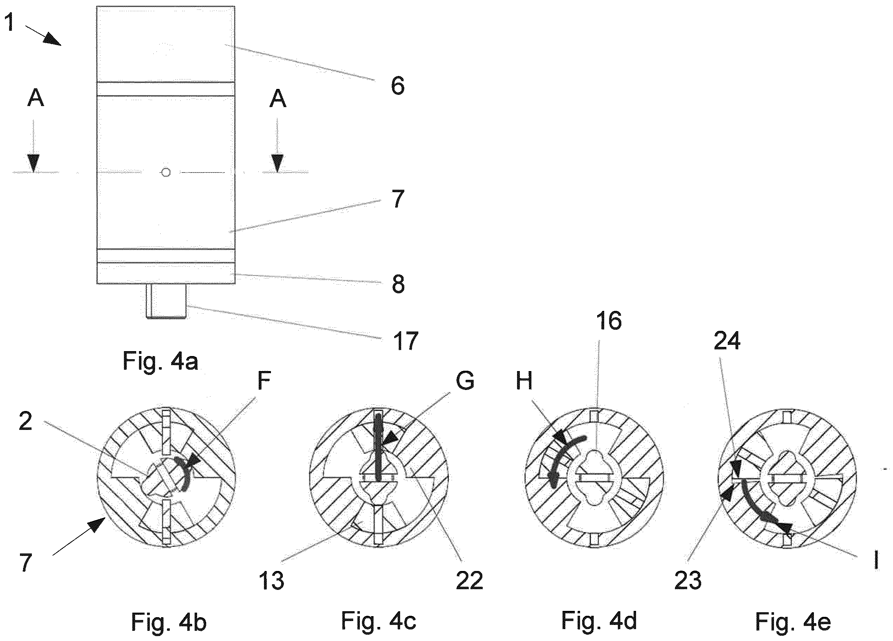

Fig. 4a zeigt die Vorrichtung 1 gemäß Fig. 1 in Ansicht von Vorne und Fig. 4b eine geschnittene Ansicht entlang der Linie A-A in Fig. 4a. In Fig. 4b ist das Impulsübertragungselement 12 in einer Zwischenstellung gezeigt, wobei die Schlagstücke 13 durch die stiftförmigen Sperrelemente 15 formschlüssig mit dem hohlzylindrischen Teil 7 des Abtriebselements 3 verbunden sind. Durch Drehung der Antriebswelle 2 gegen den Uhrzeigersinn (mit Pfeil F in Fig. 4b symbolisiert) und relativ zum Abtriebselement 3 beginnen sich die als Federelement 14 vorgesehenen Schenkelfedern 18 zu spannen.

In Fig. 4c ist das Impulsübertragungselement 12 am Endes des (inaktiven) Verdrehbereichs gezeigt, wobei die Federelemente 14 bzw. vorzugsweise Schenkelfedern 18 ganz vorgespannt sind. Die auf der Antriebswelle 2 befindlichen Nocken 16 drücken in dieser Stellung auf die Verbindungselemente 21, welche ihrerseits die stiftförmigen Sperrelemente 15 verschieben, wodurch die formschlüssige Verbindung der Schlagstücke 13 mit dem hohlzylindrischen Teil 7 des Abtriebselements 3 gelöst wird und die Schlagstücke 13 freigegeben werden. Die Verschiebung von Verbindungselement 21 und stiftförmigem Sperrelement 15 ist dabei mit Pfeil G symbolisiert.

In Fig. 4d ist das Impulsübertragselement 12 im Moment des Aufpralls an den Gegenflächen 23 des Abtriebselements 3 gezeigt. Zuvor wurde die gegenüber der Antriebswelle 2 drehbar gelagerten Schlagstücke 13 durch die Energie der Schenkelfedern 18 in Drehrichtung beschleunigt, wie mit Pfeil H symbolisiert ist, und bewegen sich auf die im Inneren des hohlzylindrischen Teils 7 des Abtriebselements 3 angeordneten vorspringenden Nocken 22 zu.

Schließlich ist in Fig. 4e ersichtlich, dass die Schlagstücke 13, nachdem sie am Ende der Drehbewegung die vorspringenden Nocken 22 erreicht haben und die Schlagflächen 24 der Schlagstücke 13, wie durch Pfeil I symbolisiert, auf die korrespondierenden Gegenflächen 23 der vorspringenden Nocken 22 geprallt sind, wird ein Drehimpuls auf das Abtriebselement 3 übertragen, der in weiterer Folge auf eine mit dem Abtriebselement 3 verbundenen Schraubverbindung eingeleitet werden kann. Nach dem Stoßvorgang können die Schlagstücke 13 wieder zurück in die in Fig. 4b gezeigte Ausgangslage gedreht werden, wo sie erneut mittels der stiftförmigen Sperrelemente 15 formschlüssig mit dem hohlzylindrischen Teil 7 des Abtriebselements 3 verbunden werden. Der anhand der Fig. 4b bis 4e beschriebene Vorgang kann beliebig oft wiederholt werden bis die schwergängige Schraubverbindung schließlich gelöst ist.

Die erfindungsgemäße Vorrichtung zeichnet sich durch einen einfachen, kostengünstigen und robusten Aufbau aus und ermöglicht ein händisches Lösen von schwer lösbaren Schraubverbindungen ohne den Einsatz von Fremdenergie und ohne Aufbringung von axialen, evtl. bauteilschädigenden, Kräften auf die Schraube. Weiters zeichnet sich die erfindungsgemäße Vorrichtung durch ihre sehr kompakte Bauweise aus, wodurch sie einfach transportiert werden kann und ihre Handhabung erleichtert wird.

## Patentansprüche

1. Vorrichtung (1) zum manuellen Lösen von Schraubverbindungen mit einer Antriebswelle (2) und einem Abtriebselement (3), das gegenüber der Antriebswelle (2) drehbar gelagert ist,wobei ein gegenüber der Antriebswelle (2) drehbar gelagertes Impulsübertragungselement (12) vorgesehen ist, das in einer inaktiven Stellung mit dem Abtriebselement (3) formschlüssig verbunden ist, wobei zwischen Antriebswelle (2) und Impulsübertragungselement (12) zumindest ein Federelement (14) angeordnet ist, das bei Verdrehung der Antriebswelle (2) gegenüber dem Abtriebselement (3) gespannt wird, so dass bei Lösen der formschlüssigen Verbindung zwischen Impulsübertragungselement (12) und Abtriebselement ein Drehimpuls an das Abtriebselement (3) übertragen wird, **dadurch gekennzeichnet, dass** das Abtriebselement (3) die Antriebswelle (2) zumindest teilweise umschließt und in der inaktiven Stellung das Impulsübertragungselement (4) und das Abtriebselement (3) über zumindest ein Sperrelement (15) miteinander verbunden sind, wobei die Antriebswelle (2) zumindest einen Nocken (9) zum Überführen des zumindest einen Sperrelements (15) in eine nicht-sperrende Stellung aufweist.

2. Vorrichtung (1) nach Anspruch 1, **dadurch gekennzeichnet, dass** das Impulsübertragungselement (12) zumindest eine Schlagfläche (24) aufweist, welche zwecks stoßartiger Impulsübertragung mit einer Gegenfläche (23) des Abtriebselements (3) zusammenwirkt.

3. Vorrichtung (1) nach Anspruch 2, **dadurch gekennzeichnet, dass** das Impulsübertragungselement (12) und das Abtriebselement (3) jeweils zwei zusammenwirkende Schlag- (24) und Gegenflächen (23) aufweist.

4. Vorrichtung (1) nach einem der Ansprüche 1 bis 3, **dadurch gekennzeichnet, dass** in der inaktiven Stellung das Impulsübertragungselement (12) und das Abtriebselement (3) über zumindest zwei, insbesondere stiftörmige, Sperrelement(e) (15) miteinander verbunden sind.

5. Vorrichtung (1) nach Anspruch 4, **dadurch gekennzeichnet, dass** die Antriebswelle (2) zumindest zwei Nocken (16) zum Überführen der Sperrelemente (15) in eine nicht-sperrende Stellung aufweist.

6. Vorrichtung (1) nach Anspruch 5, **dadurch gekennzeichnet, dass** dass die zumindest zwei Nocken (16) mittelbar über jeweils ein Verbindungselement (21), insbesondere einen Verbindungsstift, mit dem Sperrelement (15) zusammenwirken.

7. Vorrichtung (1) nach einem der Ansprüche 1 bis 6, **dadurch gekennzeichnet, dass** als Federelement (14) eine, vorzugsweise zwei, Schenkelfeder(n) (18) vorgesehen ist bzw. sind.

8. Vorrichtung (1) nach Anspruch 7, **dadurch gekennzeichnet, dass** die gegenüberliegenden Endabschnitte der zumindest einen Schenkelfeder (18) jeweils in einer nutförmigen Aufnahme (20, 19) des Impulsübertragungselements (12) und der Antriebswelle (2) formschlüssig aufgenommen sind.

9. Vorrichtung (1) nach Anspruch 8, **dadurch gekennzeichnet, dass** das Impulsübertragungselement (12) zwei, vorzugsweise diametral gegenüberliegend angeordnet, Schlagstücke (13) aufweist, die jeweils über eine Schenkelfeder (18) mit der Antriebswelle (2) verbunden sind.

10. Vorrichtung (1) nach einem der Ansprüche 1 bis 9, **dadurch gekennzeichnet, dass** das Abtriebselement einen hohlzylindrischen Teil (7) aufweist, in dessen Innenraum zumindest eine Nocke (22) vorspringt, die eine Gegenfläche (23) für die Schlagfläche (24) des Impulsübertragungselement (12) aufweist.

11. Vorrichtung (1) nach einem der Ansprüche 1 bis 10, **dadurch gekennzeichnet, dass** das Abtriebselement (3) an einer Stirnseite einen quaderförmigen Vorsprung (17) aufweist.

12. Vorrichtung (1) nach einem der Ansprüche 1 bis 11, **dadurch gekennzeichnet, dass** die Antriebswelle (2) an einer Stirnseite, vorzugsweise in einem Abschlussflansch (9), eine quaderförmige Ausnehmung (11) aufweist.

13. Vorrichtung (1) nach Anspruch 12, **dadurch gekennzeichnet, dass** die Antriebswelle (2) durch eine Durchgangsöffnung in einem Endteil (6) des Abtriebselements (3) hindurchgeführt ist, wobei der Abschlussflansch (9) der Antriebswelle (2) in einer korrespondierenden Ausnehmung des Endteils (6) aufgenommen ist.

14. Vorrichtung (1) nach Anspruch 11, **dadurch gekennzeichnet, dass** eine den quaderförmigen Vorsprung (17) aufweisende Abschlussscheibe (8), ein hohlzylindrischer Teil (7) und ein den Abschlussflansch (9) der Antriebswelle (2) aufnehmender Endteil (6) zur Ausbildung des Abtriebselements (3) unlösbar miteinander verbunden, insbesondere verschweißt, sind.

15. Vorrichtung (1) nach Anspruch 14, **dadurch gekennzeichnet, dass** die Abschlussscheibe (8) eine zentrische Vertiefung (10) zur Aufnahme eines Endabschnitts der Antriebswelle (2) aufweist.

16. Vorrichtung (1) nach einem der Ansprüche 13 bis 15, **dadurch gekennzeichnet, dass** an der Innenseite der Ausnehmung des Endteils (6) eine umlaufende Nut (5) zur Aufnahme eines Sicherungsrings (4) vorgesehen ist.

## Claims

1. Apparatus (1) for manually releasing screw connections with a drive shaft (2) and a driven element (3), which is mounted to be rotatable with respect to the drive shaft (2), wherein an impulse transmission element (12) is provided, which is mounted to be rotatable with respect to the drive shaft (2) and is positively connected to the driven element (3) in an inactive position, wherein arranged between the drive shaft (2) and the impulse transmission element (12) there is at least one spring element (14), which is stressed when the drive shaft (2) rotates with respect to the driven element (3) so that when the positive connection between the impulse transmission element (12) and the driven element is released a rotational impulse is transmitted to the driven element (3), **characterised in that** the driven element (3) at least partially surrounds the drive shaft (2) and in the inactive position the impulse transmission element (4) and the driven element (3) are connected together by at least one locking element (15), wherein the drive shaft (2) has at least one cam (9) for transferring the at least one locking element (15) into a non-locking position.

2. Apparatus (1) as claimed in Claim 1, **characterised in that** the impulse transmission element (12) has at least one impact surface (24), which cooperates with an opposing surface (23) on the driven element (3) for the purpose of impact impulse transmission.

3. Apparatus (1) as claimed in Claim 2, **characterised in that** the impulse transmission element (12) and the driven element (3) have respectively two cooperating impact surfaces (24) and opposing surfaces (23).

4. Apparatus (1) as claimed in one of Claims 1 to 3, **characterised in that** in the inactive position the impulse transmission element (12) and the driven element (3) are connected together by at least two, particularly peg-shaped, locking elements (15).

5. Apparatus (1) as claimed in Claim 4, **characterised in that** the drive shaft (2) has at least two cams (16) for transferring the locking elements (15) into a non-locking position.

6. Apparatus as claimed in Claim 5, **characterised in that** the at least two cams (16) cooperate indirectly with the locking element (5) via a respective connecting element (21), particularly a connecting peg.

7. Apparatus (1) as claimed in one of Claims 1 to 6, **characterised in that** one, preferably two, leg spring(s) is/are provided as the spring element.

8. Apparatus (1) as claimed in Claim 7, **characterised in that** the opposing end sections of the at least one leg spring (18) are interlockingly received in respective groove-shaped receptacles (20, 19) in the impulse transmission element (12) and the drive shaft (2).

9. Apparatus (1) as claimed in Claim 8, **characterised in that** the impulse transmission element (12) has two impact members (13), preferably diametrically opposed, which are connected to the drive shaft (2) by means of a respective leg spring (18).

10. Apparatus (1) as claimed in one of Claims 1 to 9, **characterised in that** the driven element has a hollow cylindrical portion (7), projecting into the interior of which there is at least one cam (22), which has an opposing surface (23) for the impact surface (24) on the impulse transmission element (12).

11. Apparatus (1) as claimed in one of Claims 1 to 10, **characterised in that** the driven element (3) has a rectangular projection (17) on one end face.

12. Apparatus (1) as claimed in one of Claims 1 to 11, **characterised in that** the drive shaft (2) has a rectangular recess (11) at one end face, preferably in an end flange (9).

13. Apparatus (1) as claimed in Claim 12, **characterised in that** the drive shaft (2) passes through an opening in an end portion (6) of the driven element (3), wherein the end flange (9) of the drive shaft (2) is received in a corresponding recess in the end portion (6).

14. Apparatus (1) as claimed in one of Claims 1 to 11, **characterised in that** an end plate (8) with a rectangular projection (17), a hollow cylindrical portion (7) and an end portion (6) receiving the end flange (9) of the drive shaft (2) are permanently connected together, particularly welded, to form the driven element (3).

15. Apparatus (1) as claimed in Claim 14, **characterised in that** the end plate (8) has a central recess (10) for receiving an end section of the drive shaft (2).

16. Apparatus (1) as claimed in one of Claims 13 to 15, **characterised in that** a peripheral groove (5) for receiving a security ring (4) is provided in the inner surface of the recess in the end portion (6).

## Revendications

1. Dispositif (1) servant à desserrer manuellement des assemblages vissés, avec un arbre d'entraînement (2) et un élément de sortie (3), qui est monté de manière à pouvoir tourner par rapport à l'arbre d'entraînement (2), dans lequel un élément de transmission d'impulsions (12) monté de manière à pouvoir tourner par rapport à l'arbre d'entraînement (2) est prévu, lequel est assemblé par complémentarité de forme à l'élément de sortie (3) dans une position inactive, dans lequel au moins un élément de ressort (14) est disposé entre l'arbre d'entraînement (2) et l'élément de transmission d'impulsions (12), lequel élément de ressort est tendu lors de la rotation de l'arbre d'entraînement (2) par rapport à l'élément de sortie (3) de sorte que lors du desserrage de l'assemblage par complémentarité de forme entre l'élément de transmission d'impulsions (12) et l'élément de sortie, une impulsion rotative est transmise à l'élément de sortie (3), **caractérisé en ce que** l'élément de sortie (3) entoure au moins en partie l'arbre d'entraînement (2) et l'élément de transmission d'impulsions (4) et l'élément de sortie (3) sont assemblés l'un à l'autre, dans la position inactive, par l'intermédiaire d'au moins un élément de blocage (15), dans lequel l'arbre d'entraînement (2) présente au moins une came (9) servant à transférer l'au moins un élément de blocage (15) dans une position non bloquante.

2. Dispositif (1) selon la revendication 1, **caractérisé en ce que** l'élément de transmission d'impulsions (12) présente au moins une surface d'impact (24), qui coopère avec une contre-surface (23) de l'élément de sortie (3) aux fins d'une transmission d'impulsions de type impact.

3. Dispositif (1) selon la revendication 2, **caractérisé en ce que** l'élément de transmission d'impulsions (12) et l'élément de sortie (3) présentent respectivement deux surfaces d'impact (24) et deux contre-surfaces (23) en coopération.

4. Dispositif (1) selon l'une quelconque des revendications 1 à 3, **caractérisé en ce que** l'élément de transmission d'impulsions (12) et l'élément de sortie (3) sont assemblés l'un à l'autre, dans la position inactive, par l'intermédiaire d'au moins deux éléments de blocage (15) en particulier en forme de tige.

5. Dispositif (1) selon la revendication 4, **caractérisé en ce que** l'arbre d'entraînement (2) présente au moins deux cames (16) servant à transférer les éléments de blocage (15) dans une position non bloquante.

6. Dispositif (1) selon la revendication 5, **caractérisé en ce que** les deux cames (16) ou plus coopèrent avec l'élément de blocage (15) indirectement par l'intermédiaire de respectivement un élément d'assemblage (21), en particulier d'une tige d'assemblage.

7. Dispositif (1) selon l'une quelconque des revendications 1 à 6, **caractérisé en ce qu'**un, de préférence deux, ressorts à branches (18) sont prévus en tant qu'éléments de ressort (14).

8. Dispositif (1) selon la revendication 7, **caractérisé en ce que** les sections d'extrémité opposées de l'au moins un ressort à branches (18) sont logées par complémentarité de forme respectivement dans un logement (20, 19) en forme de rainure de l'élément de transmission d'impulsions (12) et de l'arbre d'entraînement (2).

9. Dispositif (1) selon la revendication 8, **caractérisé en ce que** l'élément de transmission d'impulsions (12) présente deux pièces d'impact (13) disposées de préférence de manière diamétralement opposée, lesquelles sont assemblées à l'arbre d'entraînement (2) respectivement par l'intermédiaire d'un ressort à branches (18).

10. Dispositif (1) selon l'une quelconque des revendications 1 à 9, **caractérisé en ce que** l'élément de sortie présente une partie (7) cylindrique creuse, dans l'espace intérieur de laquelle au moins une came (22) fait saillie, laquelle présente une contre-surface (23) pour la surface d'impact (24) de l'élément de transmission d'impulsions (12).

11. Dispositif (1) selon l'une quelconque des revendications 1 à 10, **caractérisé en ce que** l'élément de sortie (3) présente, au niveau d'un côté frontal, une partie faisant saillie (17) de forme parallélépipédique.

12. Dispositif (1) selon l'une quelconque des revendications 1 à 11, **caractérisé en ce que** l'arbre d'entraînement (2) présente au niveau d'un côté frontal, de préférence dans une bride terminale (9), un évidement (11) de forme parallélépipédique.

13. Dispositif (1) selon la revendication 12, **caractérisé en ce**
**que** l'arbre d'entraînement (2) est guidé à travers une ouverture de passage dans une partie d'extrémité (6) de l'élément de sortie (3), dans lequel la bride terminale (9) de l'arbre d'entraînement (2) est logée dans un évidement correspondant de la partie d'extrémité (6).

14. Dispositif (1) selon la revendication 11, **caractérisé en ce qu'**une rondelle terminale (8) présentant la partie faisant (17) de forme parallélépipédique, une partie (7) cylindrique creuse et une partie d'extrémité (6) logeant la bride terminale (9) de l'arbre d'entraînement (2) sont assemblées les unes aux autres de manière inamovible, en particulier sont soudées, afin de réaliser l'élément de sortie (3).

15. Dispositif (1) selon la revendication 14, **caractérisé en ce que** la rondelle terminale (8) présente un renfoncement (10) central servant à loger une section d'extrémité de l'arbre d'entraînement (2).

16. Dispositif (1) selon l'une quelconque des revendications 13 à 15, **caractérisé en ce qu'**une rainure (5) périphérique servant à loger une bague de verrouillage (4) est prévue au niveau du côté intérieur de l'évidement de la partie d'extrémité (6).
